# EUROPEAN PATENT SPECIFICATION

(11) **EP 0 550 912 B1**
(45) Date of publication and mention of the grant of the patent: **16.09.1998**
(21) Application number: 92122128.9
(22) Date of filing: 30.12.1992
(51) Int. Cl.: H04M 1/72, H04B 1/40

(54) **Use of a voltage controlled crystal oscillator in the base unit of a two-handset cordless telephone system**
Verwendung eines spannungsgesteuerten Quarz-Oszillators in einer Feststation eines schnurlosen Telefons mit zwei Handapparaten
Application d'un oscillateur à quartz à commande en tension dans une station de base d'un système de téléphone sans fil à deux combinés

(30) Priority: 08.01.1992 US 817933
(43) Date of publication of application: 14.07.1993
(73) Proprietor: THOMSON CONSUMER ELECTRONICS, INC., Indianapolis Indiana 46201 (US)
(72) Inventor: Paniccia, Samuel Rocco, Jr., Liverpool, New York 13088 (US)
(74) Representative: Brykman, Georges

(56) References cited:
- EP-A- 0 203 819
- EP-A- 0 304 998
- DE-A- 2 615 769
- US-A- 4 134 085
- US-A- 4 935 927

## Description

### FIELD OF THE INVENTION

This invention concerns the field of cordless telephone instruments.

Cross Reference to related Application.

This application is related to the applications bearing publication numbers EP-A-0 554 571 and EP-A-0 553 497 filed herewith.

### Background of the Invention

Cordless telephone instruments for use in the home are widely available. Such systems, comprise a base unit and a remote hand-unit. The base unit is coupled to the telephone line and communicates with the remote hand-unit via FM radio signals. With such a cordless telephone system a user can remove the hand-unit from its cradle and carry it with him a short distance from his house yet still be able to make and receive telephone calls. Such a cordless telephone set is known from GE cordless telephone model number 2-9675 manufactured by Thomson Consumer Electronics, Inc. Indianapolis, Indiana.

A cordless telephone using one base unit and five hand-units is also known from the European patent application EP-A-0 304 998 in the name of Philips. It is well known in the art that such cordless telephones are delivered with six frequency channels available between hand-units and base unit. When the use of the cordless telephone is started, eg at home, a check is made to ensure that the frequency channel used is not contemporarily used by a neighbour. This avoids jamming and take-over between neighbouring telephones. In order to avoid such jamming, it is also known to exchange security codes between the hand-units and the base station at least at the beginning of a session. In the Philips reference, the cordless telephone is used as a PABX cordless telephone system. The system provides for outside and inside calls for five hand-units, the main check being made at the base station level which includes to this effect a microcontroller. Additional checks are carried out at the hand-unit level, this unit also including a microcontroller. The exchanges are effected on five of the six available frequency channels. As a consequence, the likelihood of jamming and take-over from a neighbour telephone increases and the need for security checks increases correspondingly. A regular exchange of security codes would take too much time. Therefore, in this PABX system only a part of the code, eg the MSB or the LSB, is actually exchanged.

A further example of a multi hand-unit cordless telephone system is described by Akaiwa in European Patent Application EP-A-0 203 819 entitled CORDLESS TELEPHONE SYSTEM.

The Akaiwa system includes a plurality of radiophones, each having first transmitter and a first receiver tuned to different transmission and reception frequencies; and a radio station wired to a telephone line. The radio station comprises a second receiver and a second transmitter, each having the same reception and transmission frequencies as those of the radiophones; switching means for connecting an input terminal of the second transmitter and an output terminal of the second receiver to the telephone line or for connecting the input terminal of the second transmitter and the output terminal of the second receiver in accordance with a control signal; and control means for supplying a control signal to the switching means. By changing the switch position, half-duplex communication can be performed between the radiophones. Half-duplex operation, however, limits the usefulness of such a system. If the user is engaged in a conversation via a cordless telephone, and a third person within the user's house wishes to join in the telephone conversation, that person can simply pick up a "hardwired" extension telephone. Unfortunately, the third person cannot maintain participation in the conversation without remaining in the immediate area of the hard-wired telephone unit.
The present invention avoids the limitations of the prior art described in EP-A-0 203 818 by providing full duplex operation in a multi hand-unit cordless telephone system which allows three-way conversations to take place. This full duplex operation is provided for without unacceptable intermodulation distortion. Stated in other terms, the present invention is directed to meeting the need for a multi-hand-unit cordless telephone set capable of full duplex operation
with relatively low intermodulation distortion and of simplified construction.

### Summary of the Invention

The principles of the present invention are applicable to cordless telephone sets of the type comprising a first hand unit for producing a first audio signal; a second hand unit for producing a second audio signal; and a base unit for receiving signals of the handunits, and coupling the signals of the handunits to a telephone system; the handunits and the base unit communicating via a single antenna mounted on the base, unit; said first and second hand-units transmiting said first and second audio signal on a transmitting frequency and receiving said first and second audio signal on a receiving frequency. Such a cordless telephone is known for instance from EP'819.

The invention is characterised by said first hand-unit transmitting said first audio signal on a first frequency and receiving on a second frequency , said second hand-unit transmitting said second audio signal on a third frequency and receiving on a fourth frequency and by the first and third frequencies being different frequencies near a fifth frequency, the second and fourth frequencies being different frequencies near a sixth frequency; and the base unit including
an interface unit for combining the received signals of the handunits to form a single output signal for transmission via the telephone system;
a duplexing unit for coupling the audio signals at the first and third frequencies from the antenna to first and second base unit receiver channels, and for coupling the audio signals at the second and fourth frequencies from first and second base unit transmitter channels to the antenna; the duplexing unit being tuned to pass signals at the fifth frequency and at the sixth frequency, the duplexing unit having a single input for receiving signals to be transmitted, and for conveying the signals received at the input to the antenna; and the base unit including
first and second transmitter channels transmitting at the second and fourth frequencies respectively, the transmitter channels having respective output terminals coupled to the single input of said duplexer unit; each of the first and second transmitting channels including a respective voltage controlled oscillator for producing an RF signal modulated in frequency by an audio signal, and a frequency tripler circuit for producing a higher frequency modulated RF output signal for simultaneous transmission at the second and fourth frequencies, respectively; each of the frequency tripler circuits having a filter circuit for selecting a third harmonic signal of the modulated RF output signal of its respective voltage controlled crystal oscillator, each of the third harmonic signals being one of the second and fourth frequencies, respectively.

It is herein recognised that in a cordless telephone system including a single base unit and at least two remote handunits, wherein the base unit employs two transmitter channels coupled to a single antenna, that the transmitter channels should include voltage controlled crystal oscillators (VCXOs) and frequency tripler circuitry, rather than PLLs in order to keep intermodulation distortion at the outputs of the transmitter amplifiers to a minimum. Voltage controlled oscillators are known per se. For instance, US patent 4,134,085 of Driscoll et al. describes a crystal oscillator suitable for use in mobile radio applications generally. However, it has been found that the use of such a circuit in a dual transceiver of a cordless telephone gives smaller intermodulation distortion than PLLs.

### Brief Description of the Drawing

FIGURE 1 is a block diagram of a cordless telephone system according to the subject invention.

FIGURE 2 is a more detailed block diagram of the base unit of FIGURE 1.

FIGURE 3 shows representations of the transmitter spectrum observed for both PLL and VCXO operation.

### Detailed Description of the Drawing

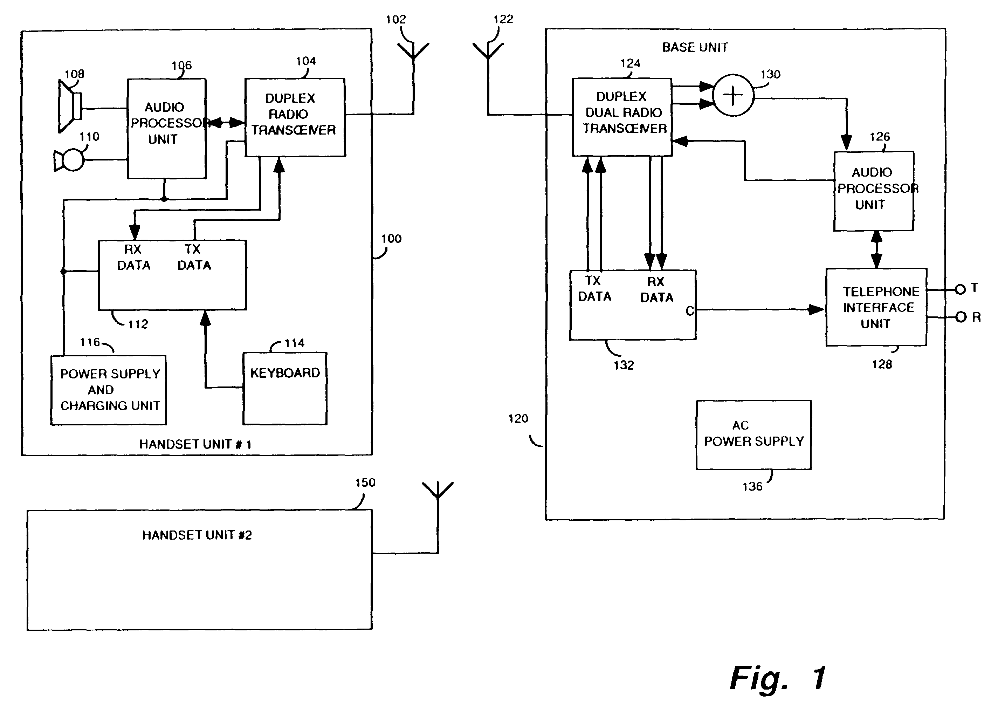

FIGURE 1 is a simplified illustration of a cordless telephone set comprising a first handset unit 100, a second handset unit 150, and a base unit 120. Because handset units 100 and 150 are identical (except for frequency allocation), only handset 100 will be described. Handset unit 100 receives and transmits RF signals via an antenna 102. Antenna 102 is coupled to a duplex radio transceiver unit 104 which is capable of operation in a receiver mode and in a transmitter mode. In the receiver mode, transceiver unit 104 applies received and demodulated audio signals to an audio processor unit 106 for amplification and ultimate reproduction in speaker 108. In the receiver mode, transceiver 104 also provides digital data to the "receive data" (i.e., Rxdata) terminal of controller 112. In the transmitter mode, transceiver 104 receives audio signals, picked-up (i.e., detected) by microphone 110 and amplified by audio processor unit 106, for transmission to base unit 120. In transmitter mode, transceiver 104 also receives "transmit data" (i.e., Txdata) from controller 112, for transmission to base unit 120. Controller 112 is coupled to a keyboard 114 for receiving keystroke commands from a user. Handunit 100 also includes a power supply and charging unit 116 for supplying operating power to the circuitry of the handunit.

Base unit 120 receives and transmits RF signals via an antenna 122 to remote handunits 100 and 150. Antenna 122 is coupled to a duplex dual radio transceiver unit 124 which is capable of operation in a receiver mode and in a transmitter mode. In the receiver mode, transceiver unit 124 receives RF signals at two different frequencies from remote handunits 100 and 150 respectively, and applies received and demodulated audio signals to an audio processor unit 126 for amplification and coupling to the telephone system via a telephone interface unit 128. Telephone interface unit 128 is connected to the telephone system via two terminals traditionally known as tip (T) and ring (R). In the receiver mode, transceiver 124 also provides digital data to the "receive data" (i.e., Rxdata) terminal of controller 132. Controller 132 has a control terminal C by which telephone interface unit 128 can be controlled to establish communication over the telephone system. In the transmitter mode, transceiver 124 receives audio signals, conveyed by the telephone system via telephone interface unit 128 and amplified by audio processor unit 126, for transmission to handunits 100 and 150. Also in transmitter mode, transceiver 124 also receives "transmit data" (i.e., Txdata) from controller 132, for transmission to handunit 100. Base unit 120 also includes an AC power supply unit 136 for supplying operating power to the circuitry of the base unit.

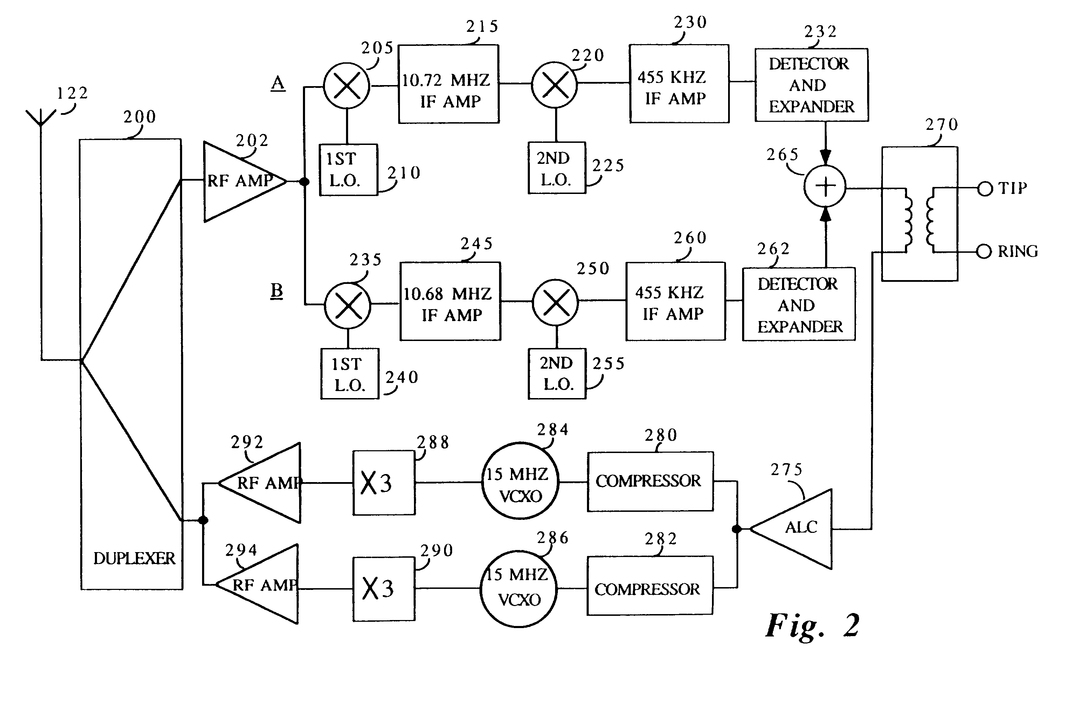

FIGURE 2 is a more detailed block diagram of duplex dual radio transceiver 124 of FIGURE 1. Antenna 122 is coupled to an RF amplifier 202 via a duplexer 200, which may be a type DPX 46/49-B10 duplexer manufactured by Soshin Electric Ltd.. Handsets 100 and 150 transmit on different frequencies near 49 MHz. The signals received from the handunits are applied to mixers 205 and 235. Mixer 205 has a second input coupled to a local oscillator 210 for receiving an oscillator signal near 39 MHz. That is local oscillator 210 is tuned to oscillate at the difference frequency between the transmission frequency of one of the remote handunits and the first intermediate (IF) frequency of 10.72 MHz of receiver channel A. Similarly, local oscillator 240 is tuned to oscillate at the difference between the transmission frequency of the other of the two remote handunits and the first nominal IF frequency of 10.68 MHz of receiver channel B.

The respective first IF frequencies of channels A and B are offset from the nominal value of 10.7 MHz as explained in copending patent application bearing publication number EP-A-0 553 497.

The down-converted 455 kHz signal of each channel is applied to respective IF amplifiers 230 and 260. After amplification the signals are detected and expanded in detector and expander units 232 and 262 to produce baseband audio signals. The baseband audio signals are then summed in a summer unit 265 and coupled to the telephone line via a hybrid transformer unit 270.

For purposes of explanation, assume that handset A transmits the signal processed in receiver channel A and handset B transmits the signal processed in receiver channel B. An A+B sidetone signal (i.e., a portion of the received signals from both channels) is coupled from hybrid transformer unit 270 via an automatic level control unit 275 to the transmitter side of the transceiver for transmission to the handunits. In this way, the sidetone signal corresponding to signals received from handset A is coupled back to handset A, and the signal received from handset A is also transmitted to handset B for A-to-B communication. Further, the sidetone signal corresponding to signals received from handset B is coupled back to handset B and the signal received from handset B is also transmitted to handset A for B-to-A communication.

The signal from automatic level control unit 275 is applied to the inputs of two compressor units 280 and 282. The compressed audio signals are applied to control inputs of separate oscillators 284 and 286 to modulate their respective output signals. Voltage-controlled crystal oscillators 284 and 286 oscillate at different frequencies near 15 MHz. The modulated signals are then applied to respective frequency triplers 288 and 290 to bring their final frequencies to different frequencies near 46 MHz. Frequency triplers 288 and 290 include a transistor and filter elements. Due to nonlinearities in the transistor, a third harmonic of the fundamental 15 MHz signal is formed. The filter elements are tuned to pass a narrow band of signals around the third harmonic (i.e., near 46 MHz) and block all others. The signals are then amplified in amplifiers 292 and 294, are combined, and applied via duplexer 200 to antenna 122.

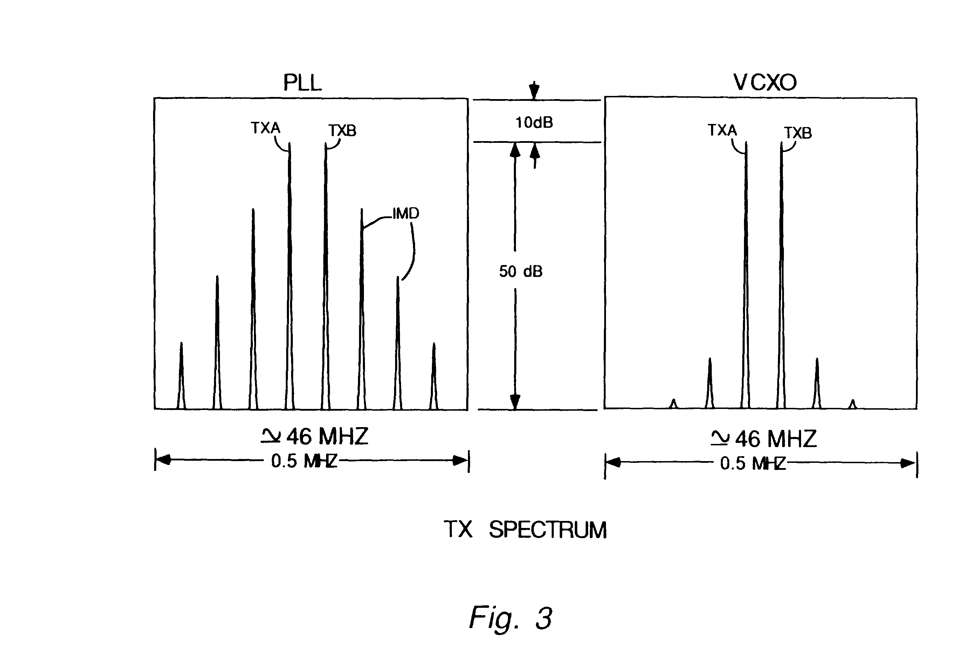

An early version of the subject apparatus employed a PLL up-converter unit in each transmitter channel. PLLs have been used recently because of the ease with which each of the 10 available cordless telephone channels can be synthesized. Some IMD (intermodulation distortion) was expected because of the configuration used, in which the output terminals of output RF amplifiers 292 and 294 are connected directly together. However, severe IMD was observed (see FIGURE 3 for the transmitter spectrum for PLL use). Referring once again to FIGURE 3, note that the IMD is sharply reduced when a VCXO and tripler arrangement is substituted for the PLL up-converter. The sharp reduction in IMD accompanying the change from PLL up-converts to VCXO circuitry clearly indicates that the source of the majority of the IMD is other than the direct connection of the output terminals of amplifiers 292 and 294, and is instead related to products generated by the PLL up-conversion process. It is noted that additional isolation can be gained by using a combiner circuit to combine the outputs of RF amplifiers 292 and 294 and by use of addition shielding between the transmitter channels, albeit at additional cost.

## Claims

1. A cordless telephone set (100,120,150), comprising:
a first hand unit (100) for producing a first audio signal;
a second hand unit (150) for producing a second audio signal; and
a base unit (120) for receiving signals of said handunits, and coupling said signals of said handunits to a telephone system (T,R);
said handunits and said base unit communicating via a single antenna (122) mounted on said base unit;
said first and second hand units transmitting said first and second audio signal on a transmiting frequency and receiving said first and second audio signal on a receiving frequency;
**characterized in that**
said first hand unit is arranged to transmit said first audio signal on a first frequency and to receive on a second frequency;
said second hand unit is arranged to transmit said second audio signal on a third frequency and to receive on a fourth frequency;
said first and third frequencies being different transmitting frequencies_ near a fifth frequency (49 MHz), said second and fourth frequencies being different receiving frequencies near a sixth frequency (46 MHz); and
said base unit (120) includes :
a telephone interface unit (128) for combining said received signals of said handunits to form a single output signal for transmission via said telephone system;
a duplexing unit (200) for coupling said audio signals at said first and third frequencies from said antenna to first (205,210,215,220,225,230,232) and second (235,240,245,250,255,260,262) base unit receiver channels, and for coupling said audio signals at said second and fourth frequencies from first and second base unit transmitter channels to said antenna;
said duplexing unit (200) being tuned to pass signals at said fifth frequency and at said sixth frequency, said duplexing unit having a single input for receiving signals to be transmitted, and for conveying said signals received at said input to said antenna; and
said base unit (120) also includes first (280,284,288,292) and second (282,286,290,294) transmitter channels transmitting at said second and fourth frequencies respectively, said transmitter channels having respective output terminals coupled to said single input of said duplexer unit;
each of said first and second transmitting channels including a respective voltage controlled oscillator (284,286) for producing an RF signal modulated in frequency by an audio signal, and a frequency tripler circuit (288,290) for producing a higher frequency modulated RF output signal for simultaneous transmission at said second and fourth frequencies, respectively;
each of said frequency tripler circuits (288,290) having a filter circuit for selecting a third harmonic signal of said modulated RF output signal of its respective voltage controlled crystal oscillator, each of said third harmonic signals being one of said second and fourth frequencies, respectively.

2. A cordless telephone set as recited in Claim 1 further characterised in that said second and fourth frequencies are offset from and occur near said sixth frequency having a value of 46 MHz and occur within a passband having a width of 0.5 MHz.

## Patentansprüche

1. Schnurloser Telefonapparat (100,120,150), enthaltend:
eine erste Handeinheit (100) zum Erzeugen eines ersten Audiosignals, eine zweite Handeinheit (150) zum Erzeugen eines zweiten Audiosignals und eine Basiseinheit (120) zum Empfangen von Signalen von den Handeinheiten und zum Zuführen der Signale der Handeinheiten zu einem Telefonnetz (T, R), wobei die Handeinheiten und die Basiseinheit über eine einzige Antenne (122) kommunizieren, die an der Basiseinheit angeordnet ist, und wobei die erste und die zweite Handeinheit das erste und das zweite Audiosignal auf einer Sendefrequenz senden und das erste und das zweite Audiosignal auf einer Empfangsfrequenz empfangen, dadurch gekennzeichnet, daß die erste Handeinheit so ausgebildet ist, daß sie das erste Audiosignal auf einer ersten Frequenz sendet und auf einer zweiten Frequenz empfängt, daß die zweite Handeinheit so ausgebildet ist, daß sie das zweite Audiosignal auf einer dritten Frequenz sendet und auf einer vierten Frequenz empfängt, daß die erste und die dritte Frequenz verschiedene Sendefrequenzen in der Nähe einer fünften Frequenz (49 MHz) sind und die zweite und die vierte Frequenz verschiedene Empfangsfrequenzen in der Nähe einer sechten Frequenz (46 MHz) sind, und daß die Basiseinheit (120) folgendes enthält :
eine Telefon-Schnittstelleneinheit (128) zum Kombinieren der empfangenen Signale der Handeinheiten, um ein einziges Ausgangssignal für eine Übertragung über das Telefonnetz zu bilden, eine Duplexereinheit (200) zum Zuführen der Audiosignale bei der ersten und der dritten Frequenz von der Antenne zu einem ersten (205, 210, 215, 220, 225, 230, 232) und einem zweiten (235, 240, 245, 250, 255, 260, 262) Basiseinheit-Empfangskanal, und zum Zuführen der Audiosignale bei der zweiten und der vierten Frequenz von den Senderkanälen der ersten und der zweiten Basiseinheit zu der Antenne, wobei die Duplexereinheit (200) so abgestimmt ist, daß sie Signale mit der fünften Frequenz und der sechsten Frequenz durchläßt und die Duplexereinheit einen einzigen Eingang zum Empfangen der zu übertagenden Signale und zum Übermiteln der empfangenen Signale an den Eingang zu der Antenne aufweist, und daß die Basiseinheit (120) außerdem erste (280, 284, 288, 292) und zweite (282, 286, 290, 294), bei der zweiten bzw. vierten Frequenz sendende Senderkanäle aufweist und die Senderkanäle jeweils Ausgangsklemmen aufweisen, die mit dem einzigen Eingang der Duplexereinheit verbunden sind, daß der erste und der zweite Senderkanal jeweils einen spannungsgesteuerten Oszillator (284, 286) zum Erzeugen eines durch ein Audiosignal frequenzmodulierten HF-Signals sowie eine Frequenzverdreifacherschaltung (288, 290) zum Erzeugen eines mit einer höheren Frequenz modulierten HF-Ausgangssignals zur gleichzeitigen Übertragung bei der zweiten bzw. vierten Frequenz aufweisen, und daß jede der Frequenzverdreifacherschaltungen (288, 290) eine Filterschaltung zum Auswählen eines Signals mit der dritten Harmonischen des modulierten HF-Ausgangssignals seines jeweiligen spannungsgesteuerten Oszillators aufweist und jedes der Signale mit der dritten Harmonischen eine der zweiten bzw. vierten Frequenz ist.

2. Schnurloser Telefonapparat nach Anspruch 1, dadurch gekennzeichnet, daß die zweite und die vierte Frequenz gegenüber einer sechsten Frequenz versetzt sind und in deren Nähe liegen, die einen Wert von 46 MHz hat und in einer Durchlaßbandbreite von 0,5 MHz auftreten.

## Revendications

1. Téléphone sans fil (100, 120, 150) comportant :
un premier combiné (100) générant un premier signal audio,
un second combiné (150) générant un second signal audio,
une base (120) recevant les signaux desdits combinés et raccordant lesdits signaux desdits combinés au système téléphonique (T,R),
lesdits combinés et ladite base communiquant par l'intermédiaire d'une antenne unique (122) montée sur la base,
ledit premier combiné et ledit second combiné émettant ledit premier et ledit second signal audio sur une fréquence d'émission et recevant ledit premier signal audio et ledit second signal audio sur une fréquence de réception,
caractérisé par le fait que :
ledit premier combiné est configuré de manière à émettre ledit premier signal audio sur une première fréquence et à recevoir sur une seconde fréquence,
ledit second combiné est configuré de manière à émettre ledit second signal audio sur une troisième fréquence et à recevoir sur une quatrième,
lesdites première et troisième fréquences étant des fréquences d'émission différentes proches d'une cinquième fréquence (49 MHz), lesdites seconde et quatrième fréquences étant des fréquences de réception différentes proches d'une sixième fréquence (46 MHz), et
ladite base (120) comportant :
un dispositif d'interface téléphonique (128) combinant lesdits signaux reçus desdits combinés de manière à générer un signal de sortie unique en vue de sa transmission vers ledit système téléphonique,
un duplexeur (200) couplant lesdits signaux audio aux dites première et troisième fréquence de ladite antenne vers ledit premier canal de réception de la base (205. 210, 215, 220, 225, 230, 232) et vers ledit second canal de réception de la base (235, 240, 245, 250, 255, 260, 262). et couplant lesdits signaux audio aux dites seconde et quatrième fréquence du premier et du second canal d'émission de la base vers ladite antenne,
le dit duplexeur (200) étant accordé de manière à laisser passer les signaux à ladite cinquième fréquence et à ladite sixième fréquence, ledit duplexeur ayant une entrée unique pour les signaux de réception à transmettre et pour envoyer lesdits signaux reçus sur ladite entrée à ladite antenne, et,
ladite base (120) comportant également un premier canal d'émission (280, 284, 288, 292) et un second canal d'émission (282, 286, 290, 294) émettant respectivement sur lesdites seconde et quatrième fréquence, lesdits canaux d'émission ayant leurs bornes de sortie respectives raccordées à l'entrée unique dudit duplexeur,
chacun desdits premier et second canal d'émission comportant un oscillateur commandé en tension (284, 286) générant un signal RF modulé en fréquence par un signal audio et un circuit tripleur de fréquence (288, 290) produisant un signal de sortie RF à fréquence plus élevée, en vue d'une émission auxdites seconde et quatrième fréquence respectivement,
chacun desdits circuits tripleurs de fréquence (288, 290) ayant un circuit de filtrage sélectionnant un signal d'harmonique trois dudit signal de sortie RF modulé de l'oscillateur à quartz commandé en tension correspondant, chacun des signaux d'harmonique trois étant à ladite seconde et ladite quatrième fréquence respectivement.

2. Téléphone sans fil selon la revendication 1, caractérisé de plus par le fait que lesdites seconde et quatrième fréquence sont décalées, mais voisines de la dite sixième fréquence ayant une valeur de 46 MHz et se trouvent dans une bande d'une largeur de 0,5 MHz.
